# FASCICULE DE BREVET EUROPEEN

(11) **EP 3 635 250 B1**
(45) Date de publication et mention de la délivrance du brevet: **28.07.2021**
(21) Numéro de dépôt: 18721829.2
(22) Date de dépôt: 11.05.2018
(51) Int. Cl.: F03G 7/04, F24T 10/00, F24T 10/20

(54) **SYSTÈME GÉOTHERMIQUE ET PROCÉDÉ POUR LA PRODUCTION ET LE STOCKAGE D'ÉNERGIE SOUS FORME THERMIQUE**
GEOTHERMISCHES SYSTEM UND VERFAHREN ZUR ERZEUGUNG UND SPEICHERUNG VON ENERGIE IN THERMISCHER FORM
GEOTHERMAL SYSTEM AND METHOD FOR PRODUCING AND STORING POWER IN THERMAL FORM

(30) Priorité: 11.05.2017 FR 1754114
(43) Date de publication de la demande: 15.04.2020
(73) Titulaire: Pluton DG, 33610 Cestas (FR)
(72) Inventeur: JEANNOU, Antoine, 33610 Cestas (FR)
(74) Mandataire: Ipside
(86) Numéro de dépôt international: PCT/EP2018/062228
(87) Numéro de publication internationale: WO 2018/206773

(56) Documents cités:
- WO-A1-2013/169242
- US-A1- 2010 043 433
- US-A1- 2011 272 166
- US-A1- 2013 232 973
- US-A1- 2014 130 498

## Description

### DOMAINE DE L'INVENTION

L'invention appartient au domaine du stockage et de la production d'énergie.

L'invention concerne en particulier un système et un procédé géothermique de production et de gestion d'un stock d'énergie sous forme thermique permettant la mise à disponibilité d'un fluide de travail pour la restitution de cette énergie stockée.

Plus particulièrement dans l'invention, le stockage de l'énergie et une augmentation de l'enthalpie d'un fluide de travail sont réalisés au moyen de formations géologiques profondes et perméables et d'apports thermiques en surface.

De manière avantageuse, la gestion de l'énergie stockée est réalisée pour optimiser la production d'énergie dans un complexe de ressources d'énergies intermittentes, telles que certaines énergies renouvelables, et ou excédentaires.

### ART ANTÉRIEUR

Dans le domaine de la production d'énergie géothermique il est connu de longue date d'exploiter des gisements d'eaux thermales principalement pour des applications de chauffage domestique ou industrielle, plus récemment pour la production d'énergie mécanique et électrique au moyen de cycles combinés et de machines thermodynamiques.

Pour la production d'énergie mécanique et électrique ce type d'exploitation présente généralement un rendement global très faible et reste soumis aux conditions naturelles de ces gisements, en particulier lorsqu'elles imposent la limitation des puisages d'énergie géothermique pour éviter un refroidissement et un épuisement rapide du gisement.

Pour l'exploitation de formations géothermales, il est également connu d'injecter de l'eau ou autre fluide caloporteur depuis la surface par un puits d'injection et de reprendre cette eau ou ce fluide par un puits de pompage de sorte que l'eau ou le fluide suive un circuit continu dans lequel il se réchauffe au contact des roches chaudes et sèches traversées. Dans ces solutions conventionnelles, le fluide caloporteur est injecté à basse température, sensiblement la température ambiante à la surface du sol, pour être prélevé une fois réchauffé par le flux thermique des couches de roches inférieures.

Une telle méthode conduit cependant à refroidir significativement les roches dans lesquelles circulent le fluide caloporteur ce qui impose que ledit fluide séjourne suffisamment longtemps dans le sous-sol pour pouvoir être à nouveau réchauffé, typiquement trois à cinq semaines, voire plus suivant les conditions géothermiques locales.

Dans le domaine des profondeurs exploitables en sous-sol, soit de celles qui permettent la possibilité d'une permanence de la perméabilité pour les formations géologiques ciblées, ce type de solution s'avère limitée en efficacité en raison des vitesses de circulation de l'eau dans les roches naturelles qui en limitent le débit et par les températures recherchées qui ne sont atteintes que dans le cas de sites exceptionnels.

Les roches présentant une perméabilité suffisante pour la circulation du fluide sont généralement situées dans des couches peu profondes.

Lorsqu'il est souhaité réchauffer un fluide caloporteur dans des roches peu perméables, en raison de leurs caractéristiques propres ou bien de la profondeur qui crée une forte pression lithostatique détruisant la porosité des roches, il est généralement proposé de pratiquer préalablement une fracturation hydraulique des roches de sorte à créer une porosité et des chemins de circulation dans lesquels le fluide caloporteur injecté peut se réchauffer au contact des roches en circulant du puits d'injection vers le puits de pompage. Un tel procédé est par exemple décrit dans la demande de brevet WO 2013/169242 A1. Ce procédé reste cependant complexe à mettre en œuvre et s'avère controversé en raison des risques écologiques induits.

En outre, pour palier au problème du refroidissement excessif des roches du gisement, cette demande de brevet WO 2013/169242 A1 propose également de créer, artificiellement par fracturation hydraulique, une pluralité de sous-zones de production produisant une pluralité de chemins de circulation et d'échanges thermiques dans lesquelles le fluide est injecté et extrait successivement, pour réaliser une production continue d'énergie, en assurant que le fluide caloporteur ne soit circulé dans un ou plusieurs de ces drains artificiels qu'après une durée de régénération géothermique suffisamment longue pour que permettre au fluide caloporteur circulé d'atteindre la valeur souhaitée.

Cette solution s'avère donc complexe à mettre en œuvre et coûteuse à réaliser.

L'énergie géothermique apparaît donc aujourd'hui comme une ressource largement sous-exploitée en raison de difficultés techniques de mise en œuvre et de rendements faibles pour la production d'énergie mécanique et électrique, alors que la ressource est immense lorsqu'il est considéré le flux radiatif de chaleur produit par le noyau terrestre et duquel il résulte un gradient moyen de 30°C par 1000m dans la croûte terrestre.

En outre, la production d'énergie géothermique est le plus souvent gérée comme une source d'énergie en soi, complémentaire d'autres sources d'énergie, mais considérée comme une source indépendante.

Les documents US 2010/043433 A1 et US 2013/232973 A1 divulguent également des systèmes de production d'énergie à partir d'une source d'origine géothermique.

### PRÉSENTATION DE L'INVENTION

La présente invention apporte une solution permettant de produire et de stocker une énergie sous forme thermique de manière durable et renouvelable pour l'utiliser à des périodes choisies, par exemple lorsque d'autres sources d'énergies sont en défaut ou pour répondre à une demande.

L'invention concerne un système de production et de stockage d'énergie sous forme thermique comportant un segment de surface dans lequel l'enthalpie (H) d'un fluide transporté dans un réseau de conduites, est transformée en énergie mécanique et ou en chaleur, et comportant un segment souterrain.

Le segment souterrain comporte au moins un puits d'injection dont un tubage, relié au réseau de conduites du segment de surface, débouche dans une formation géologique souterraine perméable pouvant réchauffer un fluide injecté dans ladite formation géologique et ou maintenir une température dudit fluide injecté, et comporte au moins un puits de production dont un tubage, relié au réseau de conduites du segment de surface, débouche dans ladite formation géologique.

Le système est caractérisé en ce que :
- le fluide est un fluide de travail, organique, ayant une pression de liquéfaction PL inférieure à 10⁶ Pa à une température de 15°C, ayant en phase liquide une densité strictement inférieure à 1 par rapport à l'eau dans les mêmes conditions de pression et température, et étant non miscible avec l'eau ;
- la formation géologique souterraine détermine un piège naturel, constituant un réservoir apte à contenir dans des roches perméables et poreuses une quantité souhaitée du fluide de travail, et a permettre la circulation du fluide de travail dans lesdites roches, sous des couches supérieures dudit piège, étanches pour ledit fluide de travail en phase liquide, et au-dessus d'un aquifère associé audit piège, les roches perméables et poreuses étant maintenues naturellement à des températures égales ou supérieures à 50°C par un flux de chaleur, d'origine géothermique, en provenance des roches inférieures, de sorte à constituer un réservoir de stockage d'énergie sous la forme d'une enthalpie dudit fluide de travail ;
- le ou les puits d'injection débouchent dans une partie basse du piège de sorte que le fluide de travail tend à migrer dans les roches perméables et poreuses du piège depuis la partie basse vers la partie haute dudit piège, dans laquelle partie haute débouche le ou les puits de production. Le fluide de travail migre sous l'effet d'une poussée d'Archimède générée sur le fluide de travail par l'aquifère et sous l'effet d'une convection thermique s'opposant à une stratification, dans lesdites roches, du fluide de travail soumis à un réchauffement au contact desdites roches réchauffées par le flux de chaleur provenant des roches inférieures ;
- le segment de surface, le ou les puits d'injection, le piège et le ou les puits de production déterminent un circuit fermé pour le fluide de travail dans lequel ledit fluide de travail est confiné.

Par une sélection d'un site géologique conforme à l'invention, ainsi que par la sélection d'un fluide aux caractéristiques spécifiées, le système permet d'induire un déplacement du fluide travail injecté dans les roches du piège, de stocker ce fluide de travail pendant une durée suffisante, pour qu'il augmente et ou conserve son enthalpie par les transferts de chaleur au contact des roches du piège, et de maintenir dans le piège un stock de fluide de travail avec une enthalpie maximale pouvant être extraite au moment souhaité.

Le fluide de travail est sélectionné pour les performances de la valorisation énergétique thermodynamique de son changement de phase liquide/gaz, et également en tant que fluide caloporteur, pour sa capacité thermique massique, aptitude à accumuler de l'énergie thermique par élévation de température.

La quantité de fluide de travail pouvant être extraite avec le bénéfice énergétique attendu est naturellement fonction des capacités de volume de stockage lié à la structure géologique du piège, à la perméabilité et à la porosité des roches du piège et le cas échéant au flux de chaleur apporté par les roches profondes pour régénérer l'enthalpie du fluide accumulateur. Ce fluide est extrait naturellement et en pression par un puits de production et après sa valorisation énergétique il est réinjecté dans le piège par un puits d'injection.

Dans une forme de réalisation, le segment de surface comporte un dispositif mélangeur agencé sur le réseau de conduites pour mélanger de l'eau en phase liquide avec du fluide de travail avant d'introduire ce mélange résultant dans l'au moins un puits d'injection. Dans le puits d'injection, le mélange est ainsi densifié ce qui facilite l'injection du fluide de travail, moins dense que l'eau, dans le piège.

Dans une forme de réalisation, le segment de surface comporte une pompe polyphasique agencée sur le réseau de conduites entre le dispositif mélangeur et l'au moins un puits d'injection pour introduire dans le puits d'injection le mélange de l'eau en phase liquide avec le fluide de travail en phase vapeur.

Dans une forme de réalisation le segment de surface comporte un condenseur agencé sur le réseau de conduites entre une machine thermodynamique de transformation de l'enthalpie du fluide de travail en énergie mécanique et le dispositif mélangeur. Il est de la sorte obtenu un fluide de travail en phase liquide, au moins pour une partie, lorsqu'il est mélangé avec l'eau.

Pour stocker une énergie disponible en surface, le segment de surface comporte un dispositif de réchauffage pour chauffer le fluide de travail en phase liquide et ou l'eau à une température égale ou supérieure à 50°C, et de préférence supérieure à 70°C. L'eau, lorsque qu'elle est chauffée à une température supérieure à celle du fluide de travail et est introduite dans le puits d'injection avec le fluide de travail, transfère de la chaleur au fluide de travail auquel elle est mélangée et le fluide de travail assure le stockage dans le piège, sous forme de chaleur, de l'énergie disponible en surface qui est utilisée pour réchauffer le fluide de travail.

Le dispositif de réchauffage du segment de surface peut être alimenté en énergie électrique transportée par un réseau de distribution et ou par des moyens de coproduction d'énergie renouvelable d'origine hydraulique, et ou d'origine solaire photovoltaïque, et ou d'origine éolienne.

Le dispositif de réchauffage du segment de surface peut être alimenté en énergie thermique par des moyens de coproduction d'énergie renouvelable d'origine solaire, et ou d'origine géothermique.

Dans une forme de réalisation, le segment de surface, le ou les puits d'injection et le ou les puits de production sont agencés pour injecter des volumes injectés de fluide de travail dans le piège et extraire des volumes extraits de fluide de travail du piège indépendamment l'un de l'autre, les différences de volumes entre les volumes injectés et les volumes extraits étant à tout moment compensé par des variations du niveau de l'aquifère dans le piège.

Un volume tampon permanent est ainsi stocké dans le piège, en conséquence le prélèvement de fluide de travail, pour l'exploitation de son enthalpie, n'est ainsi pas lié à la recharge simultanée du piège en fluide de travail et n'affecte pas sensiblement la vitesse de migration du fluide travail, dans les roches du piège.

Dans une forme de réalisation, le fluide de travail est essentiellement un gaz de pétrole liquéfié GPL comportant un mélange de propane et de butane.

Le GPL, qui peut avoir des compositions variables, présente des caractéristiques avantageuses dans une application comme fluide de travail de l'invention, en particulier une liquéfaction pour de faibles valeurs de pression, 7x10⁵ Pa (7 bars) à la température de 15°C, une densité par rapport à l'eau comprise entre 0,51 (pour le propane) et 0,58 (pour le butane), et une quasi non miscibilité avec l'eau. Le GPL est également abondant, d'un coût relativement modeste et produit industriellement.

Dans une forme de réalisation, le segment de surface comporte un évaporateur dans lequel le fluide de travail extrait en pression par le ou les puits de production est vaporisé pour entraîner une machine thermodynamique. Il est ainsi avantageusement mis en œuvre des turbines ou autres machines thermodynamiques pour transformer un maximum de l'enthalpie du fluide de travail en énergie mécanique dans un premier temps, et par exemple électrique dans un second temps en entraînant des alternateurs ou autres générateur d'énergie électrique.

Dans une forme de réalisation, le segment de surface comporte au moins un réacteur pour produire du GPL à partir d'autres hydrocarbures et ou de matières organiques, et des moyens pour transférer le GPL vers au moins un puits d'injection.

Il est ainsi possible de convertir des hydrocarbures et des déchets organiques en GPL pour remplir le système en fluide de travail, dont le carbone se trouve emprisonné dans le piège géologique sans être relâché dans l'atmosphère lors de la mise en œuvre du système. Ce système de stockage d'énergie sous forme thermique permet donc également d'éviter de dégager dans l'atmosphère le gaz carbonique CO₂ qui aurait, à défaut, été produit soit par la combustion des hydrocarbures stockés, soit par la décomposition des déchets organiques.

L'invention concerne également un procédé de production et de stockage d'une énergie sous forme thermique, au moyen du système de l'invention, dans lequel un fluide de travail est injecté dans des couches géologiques du sous-sol au contact de roches chaudes des couches géologiques du piège.

Plus particulièrement le procédé comporte une étape initiale de sélection d'un site souterrain de stockage et d'un fluide dans laquelle :
- le site souterrain de stockage est choisi parmi des formations géologiques naturelles constituant un piège comportant des roches poreuses et perméables sous des couches supérieures étanches pour le fluide de travail en phase liquide et déterminant, au-dessus d'un aquifère du piège, un volume déterminé de confinement du fluide de travail, et dans lequel les roches perméables et poreuses sont maintenues naturellement à des températures égales ou supérieures à 50°C par le flux de chaleur arrivant des roches inférieures ;
- le fluide de travail est un fluide organique, choisi parmi les fluides organiques en phases liquides dans les conditions de température et de pression dans le piège, de densités strictement inférieures à la densité de l'eau dans les conditions de température et de pression du piège, et qui ne sont pas miscibles avec l'eau.

Cette étape initiale permet de déterminer des conditions optimales pour l'application du procédé et de déterminer les capacités d'un système à stocker et produire de l'énergie d'origine thermique.

Dans un mode de mise en œuvre, le procédé comporte une étape de production et de stockage d'une énergie sous forme thermique comportant :
- une phase d'injection de fluide de travail dans une partie basse du piège par l'au moins un puits d'injection ;
- une phase de confinement dans le piège du fluide de travail injecté pendant laquelle phase le fluide de travail migre vers une partie haute du piège puis est stocké et maintenu à température dans le piège au-dessus de l'aquifère.

Il est ainsi formé un volume de fluide accumulateur d'enthalpie élevée qui constitue un réservoir d'énergie stockée sous forme thermique pouvant être utilisée à tout moment. Le temps de rétention dans le piège de ce fluide étant défini selon le mode de puisage et les caractéristiques du site.

Dans un mode de mise en œuvre, la phase d'injection comporte une étape d'apport énergétique dans laquelle une énergie disponible en surface est utilisée pour chauffer le fluide de travail en phase liquide, à une température égale ou supérieure à 50°C, de préférence supérieure à 70°C, avant d'introduire ledit fluide de travail dans un puits d'injection.

Dans un mode de mise en œuvre, la phase d'injection comporte une étape d'apport énergétique dans laquelle une énergie disponible en surface est utilisée pour chauffer de l'eau en phase liquide, à une température égale ou supérieure à 50°C, de préférence supérieure à 70°C, avant d'introduire l'eau chauffée dans un puits d'injection, mélangée à du fluide de travail.

Dans ce dernier mode de réalisation, il est avantageusement mis en œuvre une étape de préparation du fluide de travail dans laquelle le fluide de travail injecté par un puits d'injection est mélangé, avant d'être introduit dans ledit puits d'injection, avec de l'eau chaude.

Ainsi suivant le ou les modes de mise en œuvre utilisé, le fluide de travail peut être :
- liquéfié puis réchauffé pour être introduit seul et chaud dans un puits d'injection ;
- liquéfié pour être mélangé, en ayant été ou non préalablement réchauffé, avec de l'eau chauffée pour être introduit dans un puits d'injection ;
- mélangé en phase vapeur avec de l'eau chauffée en phase liquide avant d'être introduit dans un puits d'injection.

Dans tous les cas il est obtenu d'apporter au fluide de travail, avant son injection dans le piège, sous forme calorifique, une énergie disponible en surface qui sera avantageusement stockées dans le piège.

Dans un mode de mise en œuvre, le procédé comporte une étape de puisage dans laquelle du fluide de travail chaud stocké dans le piège est prélevé dans la partie haute du piège par au moins un puits de production et amené en phase liquide vers des installations du segment de surface.

Le fluide ainsi prélevé correspond au fluide de travail ayant l'énergie thermique maximale dans le piège.

Dans un mode de mise en œuvre, le procédé comporte une étape de valorisation énergétique de production d'énergie mécanique et ou thermique à partir d'une enthalpie (H) du fluide de travail amené vers les installations du segment de surface après l'étape de puisage, puis de recyclage du fluide de travail par réinjection dans une partie basse du piège par au moins un puits d'injection.

La quantité de fluide de travail prélevée est ainsi restituée dans le piège et son injection dans une partie basse du piège, éloignée de la partie dans laquelle elle a été prélevée, permet, compte tenu des temps de migration dans les roches, que le fluide accumulateur réinjecté soit, si besoin, réchauffé dans le piège, du fait de son parcours dans la roche et de son temps de rétention, avant d'être à nouveau puisé.

Dans un mode de mise en œuvre, des étapes de puisage successives sont réalisées à des intervalles de temps dont une durée minimale est déterminée en fonction d'un volume maximum de fluide de travail prélevé lors d'une étape de puisage et d'un temps de rétention moyen d'une molécule de fluide de travail dans le piège. Suivant l'efficacité de la recharge énergétique du piège, le prélèvement peut ainsi être continu ou périodique en fonction du débit de fluide de travail puisé et réinjecté.

Dans un mode de mise en œuvre, le fluide de travail est injecté dans le piège avec une température sensiblement égale à la température des roches du piège et le temps de rétention moyen est déterminé par la durée de migration de la molécule de fluide de travail entre la partie basse du piège dans laquelle elle est injectée et la partie haute de laquelle elle est extraite. Dans ce cas le fluide de travail est maintenu stocké à la température voulue qui est également sa température d'injection dans le piège et le temps de rétention n'est pas dépendant d'un temps de réchauffage au contact des roches.

Dans un mode de mise en œuvre, le fluide de travail est injecté dans le piège avec une température inférieure à la température des roches du piège et le temps de rétention moyen est déterminé par un temps nécessaire pour que la molécule de fluide de travail retrouve une enthalpie définie pour sa valorisation énergétique après son injection ou sa réinjection dans le piège et avant son extraction du piège. Dans ce cas, le temps de rétention est également contraint par les capacités du piège à apporter une chaleur nécessaire pour amener le fluide de travail à la température souhaitée.

Dans ce dernier mode, un volume maximum de fluide de travail prélevé dans un piège lors d'une étape de puisage est défini pour ledit piège pour que le temps de rétention moyen assure la régénération de l'enthalpie d'un volume de fluide de travail réinjecté équivalent au volume maximum prélevé lors d'un puisage.

### PRÉSENTATION DES FIGURES

L'invention est décrite en référence aux figures qui sont données à titre d'un exemple non limitatif d'un mode de réalisation de l'invention, qui représente de manière schématique :
Figure 1 : une représentation d'ensemble d'un exemple de système suivant l'invention ;
Figure 2 : un schéma des principales étapes du procédé de l'invention ;
Figure 3 : une représentation schématique des flux d'énergie thermique lors de la mise en œuvre du procédé.

Sur les figures, les dessins des différentes parties du système et de ses composants sont représentés symboliquement et ne sont pas représentés avec une même échelle.

### DESCRIPTION D'UN MODE DÉTAILLÉ DE RÉALISATION ET DE MISE EN ŒUVRE DE L'INVENTION

Le système de l'invention s'appuie sur la combinaison de trois caractéristiques principales précisément déterminées pour obtenir le résultat et les avantages de l'invention.

Ces trois caractéristiques principales, qui sont détaillées dans l'exemple de réalisation dont la description détaillée est donnée ici, sont :
- la présence sur un site d'implantation du système d'une formation géologique déterminant un piège caractérisant un volume de stockage ;
- une profondeur du piège déterminante de la température d'origine géothermique ;
- la mise en œuvre d'un fluide accumulateur de chaleur et utilisé comme fluide de travail thermodynamique.

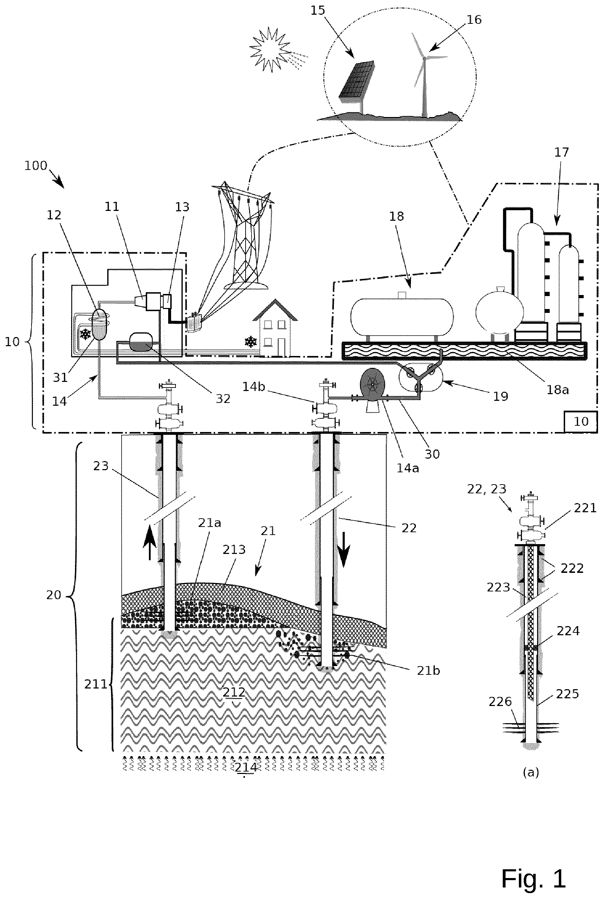

La figure 1 illustre de manière très schématique un exemple de système de stockage et de production d'énergie 100 selon l'invention.

Le système 100 comporte :
- un segment de surface 10
- un segment souterrain 20

Le segment de surface 10 comporte un ensemble d'équipements conventionnels pour l'exploitation énergétique du fluide de travail, en particulier des machines thermodynamiques 11 pour convertir la chaleur de la source chaude en énergie mécanique, par exemple pour entraîner un générateur électrique 13, et des échangeurs 12 pour refroidir un fluide d'un circuit secondaire, par exemple pour des applications de conditionnement de la température.

Le segment de surface 10 comporte également un réseau 14 de conduites, de pompes 14a et de vannes 14b, d'évaporateurs 31 et de condenseurs 32, pour assurer la circulation du fluide de travail 30 utilisé comme transporteur de l'énergie géothermique et également mis en œuvre comme fluide de travail pour les machines thermodynamiques 11, en circuit « fermé » comme il sera compris de la suite de la description, ledit fluide de travail extrait du segment souterrain 20 étant réinjecté dans ledit segment souterrain après avoir libéré l'énergie utilisée.

Le cas échéant le segment de surface comporte des échangeurs thermiques, non représentés, pour la production d'un froid utilisable à partir de la vaporisation endothermique du fluide de travail en amont des machines thermodynamiques.

Le segment de surface 10 comporte également un dispositif de production d'eau chaude 18, lequel comporte avantageusement un réservoir tampon. Ledit dispositif de production d'eau chaude est agencé pour introduire de manière contrôlée de l'eau chaude dans le réseau de conduites dans lequel circule le fluide de travail, avant que ledit fluide de travail ne soit réinjecté dans le segment souterrain 20.

Le dispositif de production d'eau chaude 18 est lui-même alimenté en énergie par une ou plusieurs sources d'énergie 15, 16, dont des exemples sont présentées ultérieurement dans la description.

Les machines thermodynamiques sont par exemple des turbines entraînées par le fluide de travail, qui, une fois vaporisé, est détendu dans les étages de turbines, puis une fois turbiné, est repris pour être à nouveau réchauffé. Ce type de machines thermodynamiques est connu de l'homme du métier qui déterminera en fonction de ses contraintes propres une machine la mieux adaptée à sa situation.

A titre d'exemples non limitatifs de catégories de machines thermodynamiques, il est connu celles mettant en œuvre un entraînement d'une turbine directement par la vapeur résultant d'une détente du fluide, également connue sous la désignation « flash », celles mettant en œuvre un cycle Rankine, celles mettant en œuvre un cycle Stirling.

Le segment souterrain 20 comporte principalement une formation géologique de stockage, qui sera désigné de manière synthétique « piège » 21, au moins un puits d'injection 22 et au moins un puits de production 23.

Le piège 21 est une formation géologique naturelle dont la sélection est réalisée suivant des critères spécifiques pour les besoins de l'invention.

Le piège 21 est une formation géologique située à une profondeur d'environ 3000m, en pratique entre 2000m et 4000m à compter de la surface du sol.

Compte tenu du gradient de température dans la croûte terrestre, le choix d'une telle profondeur permet d'obtenir une température des roches environnantes supérieure à 50°C, le plus souvent supérieure à 70°C, et en général de l'ordre de 90 à 120°C. Les différentes conductivités thermiques des formations géologiques ainsi que les épaisseurs variables de la croûte terrestre modifient le transfert du flux de chaleur terrestre du noyau vers la surface. Ces variations caractérisent des conditions locales de températures et contribuent en pratique à la sélection d'un site.

Cette température permet d'apporter une énergie thermique significative au fluide de travail 30, dont l'enthalpie sera utilisée lors de la production d'énergie, et d'améliorer les rendements thermodynamiques des installations du segment de surface 10. Une température suffisamment élevée, supérieure à 70°C, outre qu'elle améliore l'efficacité énergétique du système, permet d'inhiber le développement des organismes vivants anaérobies et pouvant entraîner une biodégradation des hydrocarbures.

Le choix d'une telle profondeur s'avère également favorable pour obtenir une porosité et une perméabilité souhaitée des roches 211 du piège 21.

Il est en effet connu que plus la profondeur augmente, plus la température augmente comme signalé, mais également plus les roches sont compactes sous l'effet de la charge lithostatique exercée par les couches supérieures.

Des roches trop compactes ne présentent pas la porosité suffisante pour assurer un stockage de liquides ni une perméabilité suffisante pour permettre une circulation des fluides au sein desdites roches, en particulier la circulation de l'eau occupant naturellement les formations géologiques concernées, et la circulation du fluide de travail 30 qui y serait injecté.

Le piège 21 est caractérisé dans une limite supérieure dudit piège par des couches géologiques supérieures 213, formant un dôme, dont la nature assure une étanchéité du piège et bloque la migration vers le haut des fluides stockés dans le piège.

Le piège 21 est également associé à un aquifère 212 dont le niveau est susceptible d'évoluer à l'intérieur du piège 21 sous les effets des différents fluides enfermés dans le piège et de leurs pressions.

Il sera compris ici que les notions utilisées sont des notions relatives qui caractérisent le milieu géologique en fonction des effets recherchés. Par exemple l'étanchéité des couches supérieures d'un piège n'est généralement pas parfaite mais est considéré comme étanche en dessous d'une perméabilité maximale admissible.

L'homme du métier aura compris ici que les caractéristiques attendues du piège 21 font appel à des notions connues dans le domaine de l'exploration et de l'exploitation pétrolière.

L'homme du métier sait également que les formations géologiques sont sujettes à de grandes dispersions de leurs caractéristiques et que si, celles qui sont sélectionnées pour le système de l'invention se rencontrent le plus souvent entre des profondeurs de 2000m et 4000m, ces limites de profondeur ne sont pas à considérer de manière stricte. En effet, les différentes conductivités thermiques des formations géologiques ainsi que les épaisseurs variables de la croûte terrestre modifient le transfert du flux de chaleur terrestre du noyau vers la surface. Ces variations de température caractériseront les conditions locales de température et contribueront à la sélection du site. Egalement, les caractéristiques de porosité et de perméabilité dépendent de l'histoire géologique du site.

Il sera retenu en pratique que, qualitativement, le piège du système de l'invention :
- présente une couche supérieure d'une étanchéité suffisante au fluide de travail 30 ;
- comporte des roches 211 dont la porosité et la perméabilité permettent un volume de stockage souhaité du fluide de travail et une circulation du fluide de travail et de l'eau de l'aquifère 212 ;
- est associé à un aquifère 212 susceptible d'occuper tout ou partie d'un volume du piège 21 ;
- les roches 211 dans le piège sont à une température d'au moins 50°C pour obtenir une enthalpie minimale souhaitée du fluide de travail, de préférence supérieure à 70°C pour inhiber le développement des bactéries dégradant les hydrocarbures, et de préférence supérieure à 90°C pour un meilleur rendement énergétique, et exposées à un flux de chaleur émanant de roches profondes 214, suffisant pour compenser une quantité de chaleur qui sera prélevée dans les roches 21 du piège lors de la mise en œuvre de l'invention.

Ces diverses qualités sont assez voisines de celles attendues d'un gisement pétrolier pour caractériser les performances possibles d'un puits de pétrole.

Avantageusement un site envisagé fera l'objet d'une cartographie du piège géologique pour estimer sa hauteur utile et estimer des volumes de stockage possibles, afin de déterminer l'aptitude du piège à répondre à un besoin présent identifié, et également à un besoin futur qui pourrait être satisfait par des évolutions possibles du stockage géothermique et l'adéquation du positionnement présent et futur des puits de production et d'injection.

Le ou les puits d'injection 22 et le ou les puits de production 23 présentent chacun des structures similaires et conventionnelles de forages tels qu'ils sont connus dans le domaine de l'exploration et de l'exploitation pétrolière.

On retrouve donc dans le cas général, comme illustré sur le détail (a) de la figure 1, depuis la surface du sol jusqu'à l'aboutissement du forage : une tête de puits 221, des sabots 222 de tubages, un tubage 223 d'injection ou de production, des garnitures 224 d'étanchéité, un tubage court 225 de réservoir et des perforations 226 dudit tubage court au droit du réservoir. Le puits est donc un moyen de mise en communication de la surface avec un emplacement du piège dans lequel débouchent les perforations 226.

Dans le système de l'invention, le ou les puits d'injection 22 sont situés pour déboucher dans le piège 21 dans une partie basse 21b dudit piège, de préférence à distance, verticalement, d'une partie haute 21a dudit piège, et le ou les puits de production 23 sont situés pour déboucher dans ladite partie haute, c'est-à-dire près d'un sommet de la structure en dôme des couches géologiques supérieures 213 du piège.

Le fluide de travail 30 dans le système de l'invention est également sélectionné parmi les fluides ayant les caractéristiques suivantes :
- le fluide de travail 30 est un fluide organique stable ;
- le fluide de travail 30 peut être maintenu à l'état liquide dans des conditions ordinaires de températures à des pressions modérées, e.g. 5 à 10 fois la pression atmosphérique à 15°C, et dans les conditions de pressions et températures rencontrées par ledit fluide de travail dans un parcours depuis une injection jusqu'au puisage dans le piège 21 ;
- le fluide de travail 30 est quasiment non miscible à l'eau dans les conditions de pressions et de températures du piège 21 ;
- le fluide de travail 30 est moins dense que l'eau,
- bien sûr le fluide de travail 30 sera également choisi en raison de sa chaleur spécifique qui le rend apte à accumuler thermiquement de l'énergie et à restituer l'enthalpie accumulée.

Dans une forme préférée de réalisation, le fluide de travail est un Gaz de Pétrole Liquéfié dit GPL, mélange connu contenant principalement du propane C₃H₈ et du butane C₄H₁₀.

Le GPL, outre qu'il présente les caractéristiques attendues comme fluide de travail de l'invention est un fluide abondant et relativement économique. Il est principalement utilisé pour sa combustion exothermique avec l'oxygène de l'air et il est facilement transportable en raison de son stockage liquide sous faible pression.

Dans des conditions souterraines de stockage ce fluide organique peut être sensible à une contamination et à une biodégradation par des micro-organismes, et sa mise en stockage à une température supérieure à 70°C dans le piège où il est amené à séjourner est préférable pour le protéger par pasteurisation de ces contaminations et dégradations.

Le GPL présente sensiblement les caractéristiques suivantes :
- pression de liquéfaction à 15°C = 7 bar
- densité à l'état liquide à 15°C = entre 0,51 et 0,58 par rapport à l'eau
- chaleur spécifique à 15°C = 13,9 kWh/kg
- chaleur latente de vaporisation = 0,12 kWh/kg
- miscibilité avec l'eau négligeable (< 0,05 g/l)

Le système 100 est un système complexe mettant en œuvre de nombreux équipements dont la commande et le contrôle doivent être assurés lors du fonctionnement dudit système.

En pratique le système 100 comporte un dispositif de supervision, non représenté, qui reçoit les informations de divers capteurs de mesures de paramètres physiques et de surveillance et qui commande les différents équipements, par exemple des vannes, des pompes, la production d'eau chaude ..., pour assurer le fonctionnement attendu du système. Il ne sera pas ici décrit de réalisation particulière du dispositif de supervision dont les fonctions principales seront aisément déduites de la description suivante de la mise en œuvre du système.

### MISE EN ŒUVRE DU SYSTÈME ET PROCÉDÉ

Pour produire de l'énergie avec le système qui vient d'être décrit le fluide de travail 30 parcourt donc un circuit fermé.

Il faut comprendre en cela que le fluide de travail 30, le GPL, dans l'exemple de réalisation considéré, ou tout autre fluide organique disposant de caractéristiques similaires, n'est pas utilisé en tant que carburant et n'est pas relâché, ni directement ni indirectement, dans l'atmosphère. Ledit fluide de travail ne subit pas de transformation chimique lors de la mise en œuvre du procédé, mais seulement des modifications de ses caractéristiques physiques, notamment pression, température, changement de phase.

Dans une étape initiale 510 un site géologique est sélectionné 511 et un fluide de travail est sélectionné 512 pour répondre aux critères décrits supra.

Le site géologique est également choisi en fonction de ses capacités, en particulier pour le volume disponible qu'il offre pour stocker du fluide de travail (fonction principalement de la porosité des roches), pour ses possibilités de circulation du fluide dans le piège (fonction principalement de la perméabilité des roches du piège), pour ses apports d'énergie géothermique au fluide de travail, fonction d'un flux d'énergie géothermique issu des roches sous-jacentes et des apports calorifiques opérés en surface. Il est compris ici que les valeurs de porosité et de perméabilité sont à considérer de manière globale et en valeurs moyennes à l'échelle d'un site donné, ces valeurs pouvant présenter des variations sensibles dans une structure géologique sans remettre nécessairement en cause ses qualités d'ensemble dans l'invention.

Dans cette étape initiale 510 seront mis en œuvre des simulations s'appuyant sur des données de sondages existants ou bien d'explorations pour des sites envisagés afin de déterminer les performances qui pourront être espérées, in fine en termes de puissances et en termes d'énergie stockée.

Dans une étape suivante, il est mis en œuvre une étape de stockage 520 d'énergie sous forme thermique et de production d'énergie géothermique.

Dans une phase d'injection 521 de l'étape de stockage 520, du fluide de travail 30, par exemple du GPL, est envoyé dans au moins un puits d'injection 22.

Dans l'application du stockage d'une énergie disponible en surface, ladite énergie est mise en œuvre dans une étape d'apport énergétique 522a, 522b pour chauffer le fluide de travail en phase liquide et ou de l'eau 18a, par un dispositif de réchauffage 18 du segment de surface 10.

Puis, lorsque l'apport énergétique utilise le chauffage d'eau, dans une étape de préparation 523 du fluide de travail avant injection, ledit fluide de travail est mélangé à l'eau chauffée.

Le fluide de travail, relativement froid après avoir cédé son enthalpie, ou chauffé à une température inférieure à celle de l'eau, est dans ce cas réchauffé par l'eau 18a chaude à son contact lors de son passage dans le puits d'injection, eau chauffée préalablement qui constitue une réserve de quantité de chaleur produite par les sources d'énergie 15, 16 externes et qui va augmenter l'enthalpie du fluide de travail.

On comprend que ledit fluide de travail, duquel une énergie a été extraite dans les turbines, est, avant d'être introduit dans le puits d'injection 22, à relativement basse température par rapport à la température des roches dans le piège, typiquement proche de la température ambiante au niveau du sol, par exemple environ 20°C.

Dans un mode de mise en œuvre, le fluide de travail est introduit en phase vapeur dans le puits d'injection. Dans ce cas il n'est pas mis en œuvre de condenseur et l'eau est envoyée en phase liquide avec le fluide de travail en phase vapeur, par exemple au moyen de la pompe 14a qui est avantageusement dans ce cas une pompe polyphasique.

Sous l'effet de la pression générée par la colonne d'eau dans le puits d'injection, le fluide de travail va rapidement se liquéfier dès que la pression locale aura atteint la pression de liquéfaction. En pratique, compte tenu des caractéristiques du fluide de travail, une pression suffisante est atteinte vers 100 m environ en dessous de la tête de puits 221, donc très rapidement en comparaison de la profondeur du forage, généralement compris de 2000m et 4000 m.

Dans un mode de mise en œuvre, le fluide de travail est introduit en phase liquide dans le puits d'injection. Dans ce cas, le fluide de travail est liquéfié dans le condenseur 32 pour être introduit dans le puits d'injection avec ou sans eau réchauffée.

Dans ce dernier mode, le fluide de travail est condensé dans le condenseur 32, agencé sur le réseau de conduites entre une machine thermodynamique (11) de transformation de l'enthalpie du fluide de travail en énergie mécanique et le puits d'injection (22).

Le fluide de travail étant dans ce cas introduit en phase liquide dans le puits d'injection, un rapport entre la quantité de fluide de travail et la quantité d'eau dans le mélange introduit dans le puits d'injection peut varier dans d'importantes proportions, qui seront définies par l'homme du métier en fonction d'une optimisation du système et de son fonctionnement, et, dans un cas extrême, le fluide de travail peut être introduit dans le puits d'injection seul, c'est-à-dire sans avoir été mélangé à de l'eau.

Dans les différents modes de mise en œuvre précisés ci-dessus, le fluide de travail lorsqu'il est injecté en phase liquide peut être réchauffé au moyen de l'énergie disponible en surface, devant être stockée dans le piège, avant d'être introduit dans le puits d'injection et indépendamment d'un apport ultérieur éventuel par un mélange avec de l'eau chaude.

Quel que soit le mode mis en œuvre pour introduire le fluide de travail et l'eau dans le puits d'injection, l'eau réchauffée et le fluide de travail sont en phases liquides dans sur la partie du puits d'injection 22 en dessous de 100 m environ de profondeur et en arrivant dans le piège 21 par le puits d'injection 22.

Il sera également noté à ce stade du procédé que lorsque de l'eau est introduite dans le puits d'injection, cette eau participe à l'injection du fluide de travail en générant une pression hydrostatique qui s'oppose à la pression régnant dans l'aquifère 212.

En effet, si le fluide de travail devait être injecté seul, d'une part il serait nécessaire de mettre en œuvre des pompes plus puissantes, pour vaincre la pression de l'aquifère, en raison de la densité en phase liquide du fluide de travail sensiblement plus faible que celle de l'eau, pour le GPL entre 0,5 et 0,6 par rapport à l'eau, et d'autre part ledit fluide le fluide de travail devrait être amené et maintenu par des pompes à une pression de liquéfaction dans le puits d'injection.

Dans une forme de réalisation, l'eau est chauffée à au moins 90 °C de sorte à accumuler un maximum d'énergie à pression ambiante, mais en restant en dessous de la température d'ébullition dans les conditions de pression atmosphérique à la surface du sol.

Pour la phase d'injection 521, le système doit être chargé en fluide de travail, ce qui peut être réalisé lors d'une phase de remplissage initiale 529 dans laquelle le fluide de travail est apporté depuis une source externe. Il doit être noté que cette charge peut n'être que partielle par rapport à la capacité maximale du piège, car le système fonctionne avec une charge partielle, même si ses performances en terme de capacité de stockage d'énergie sont bien sûr inférieures à ce qu'elles seraient si le système était chargé avec une plus grande quantité de fluide de travail, et être complétée ultérieurement en fonction par exemple de la disponibilité d'une source de production de fluide de travail ou bien d'une évolution des besoins d'une capacité de stockage d'énergie et de production d'énergie par le système.

Dans une phase courante de fonctionnement du système 100, comme il sera compris par la suite, le fluide de travail qui a été extrait du piège est réinjecté dans le piège après avoir cédé une partie de son enthalpie H dans le segment de surface 10.

Des variations de quantité de fluide de travail dans le piège, conséquence du fonctionnement du système ou d'une modification de la quantité de fluide de travail mis en œuvre, ne perturbent pas le fonctionnement du système, la limite supérieure de l'aquifère 212 fluctuant en conséquence du volume occupé dans le piège par ledit fluide de travail et assurant une mise en pression du fluide de travail en phase liquide qui s'accumule dans la partie supérieure 21a du piège sous l'effet de la poussée d'Archimède en raison de la densité dudit fluide de travail inférieure à celle de l'eau de l'aquifère 212.

Dans une phase de confinement 524 de l'étape de stockage 520, le fluide de travail injecté dans le piège 21, réchauffé par l'eau lors de son passage dans le puits d'injection, est maintenu dans les roches 211, soit lors de sa migration depuis un point d'injection dans la partie inférieure 21b du piège vers la partie supérieure 21a dudit piège sous l'effet de la poussée d'Archimède, soit plus ou moins immobile dans la partie supérieure 21a ou soumis à des mouvements de convection thermique.

En pratique la phase de confinement consiste à maintenir une molécule du fluide accumulateur (considérée statistiquement) pendant une durée déterminée dans les roches 211 du piège, ladite durée déterminée étant une durée de rétention définie.

La température du fluide de travail, lorsqu'il est injecté dans le piège, résulte de sa température initiale en surface, de la température de l'eau chaude avec laquelle il est introduit dans le puits d'injection et de l'échauffement subit par sa circulation dans le puits d'injection. Il sera veillé dans le bilan thermique de l'étape d'injection à ce que la température du fluide de travail lorsqu'il est injecté dans le piège soit au plus la température des roches dudit piège, faute de quoi le fluide de travail perdrait au contact desdites roches une partie de son enthalpie.

Si la température du fluide travail lorsqu'il est injecté dans le piège est sensiblement celle de la température des roches dans ledit piège, ledit fluide de travail sera en mesure de conserver son enthalpie aussi longtemps qu'il restera stocké.

Par ailleurs, pour autant que la température des roches dans le piège soit supérieure à la température à laquelle le fluide de travail est injecté dans ledit piège, il sera possible d'augmenter l'enthalpie de ladite molécule à une valeur souhaitée pour son utilisation par le segment de surface. Dans ce cas, la durée de rétention prendra en compte un temps d'exposition au flux géothermique et une efficacité des échanges thermiques qui sont fonction du trajet de migration, compte tenu des caractéristiques propres au piège géologique, caractéristiques qui auront été déterminées par les analyses des données de mesures effectuées lors des explorations du site géologique, en particulier pour sélectionner ledit site géologique.

En pratique, lors de sa migration et lorsque le fluide accumulateur 30 est piégé dans les roches, il se réchauffe au contact desdites roches chaudes du piège ou pour le moins il est maintenu à sa température d'injection dans ledit piège, roches qui sont constamment soumises au flux thermique ayant son origine dans le noyau terrestre, et diffusé par le manteau et les roches profondes 214.

Un temps de cheminement d'une molécule dans les roches du piège pour que ladite molécule atteigne les caractéristiques voulues, selon les conditions de lieu et de température, de son extraction par un puits de production depuis son injection, permet de déduire un temps de rétention minimal dans le piège et détermine les possibilités de continuité du prélèvement qui devra être interrompu si besoin pour que le fluide de travail réinjecté puisse retrouver l'enthalpie souhaitée.

Il doit être noté que cette phase de confinement permet au fluide de travail d'atteindre et ou de maintenir une température bien supérieure à celle qui est atteinte dans des dispositifs à circulation continue dans lesquels un fluide accumulateur est extrait sans stockage. En particulier, la température voulue est atteinte plus rapidement que dans les systèmes connus injectant un fluide caloporteur relativement froid, en raison du réchauffement dudit fluide de travail au contact de l'eau chaude dans le puits d'injection qui évite un refroidissement excessif des roches du piège.

Il est en effet connu des systèmes conventionnels d'extraction d'énergie géothermique que le réchauffement du fluide caloporteur conduit à un refroidissement intensif des roches au contact desquelles il se réchauffe et que la régénération thermique de ces roches est longue, en raison du flux de chaleur arrivant dans les roches concernées de seulement quelques dizaines de milliwatts. Dans de telles conditions le fluide caloporteur doit être maintenu pendant une durée relativement longue, de 20 à 30 jours au moins, au contact des roches avant de pouvoir être pompé et exploité.

Dans l'invention, suivant un mode de mise en œuvre, le prélèvement de fluide de travail est périodique pour assurer que l'enthalpie du fluide de travail réinjecté se reconstitue pendant son étape de passage d'un puits d'injection 22 à un puits de production 23 et de stockage pendant les périodes d'interruption de prélèvement. Ce mode de mise en œuvre est adapté lorsqu'il est recherché que le fluide de travail soit rechargé en enthalpie lors de son passage dans le piège.

Suivant un mode de mise en œuvre dans lequel le fluide de travail est injecté à une température suffisante pour pouvoir être exploité sans élévation de sa température, le prélèvement du fluide de travail peut être réalisé à tout moment sans contrainte de temps de rétention. Dans ce cas, un débit d'exploitation du fluide de travail sera limité par les capacités du piège à permettre ce débit compte tenu en particulier de la perméabilité des roches dudit piège.

Dans une étape ultérieure de valorisation énergétique 530, il est procédé à un puisage 531 du fluide de travail 30 à une température souhaitée, à des fins d'utilisation de l'énergie thermique dudit fluide de travail, ayant été stocké dans les roches 211. En pratique, le fluide de travail est extrait, sans pompage, par le ou les puits de production 23, naturellement sous l'effet de la pression exercée par l'aquifère, pour être introduit chaud et sous pression dans le réseau 14 du segment de surface.

L'étape de puisage 531, qui peut être interrompue à tout moment, est nominalement stoppée lorsqu'une quantité maximale de fluide de travail a été extraite, ladite quantité maximale correspondant, en régime moyen équilibré, au plus à une quantité de fluide de travail dont l'enthalpie H a été régénérée, par l'eau chaude de surface introduite dans le puits d'injection et le cas échéant au contact des roches du piège par l'énergie d'origine géothermique, pendant l'étape de stockage 520.

Le fluide de travail 30 puisé dans le piège est alors mis en œuvre de manière conventionnelle dans le segment de surface 10 dans une étape de valorisation énergétique 532, par exemple par vaporisation et détente dans des turbines 11 pour être converti en énergie mécanique utilisable.

Le fluide de travail ayant cédé une partie de son enthalpie H est conduit, le cas échéant en phase liquide après avoir été condensé, pour être recyclé 540 vers un ou des puits d'injection 22 afin d'être ré-injecté 521 pour une nouvelle étape de stockage 520.

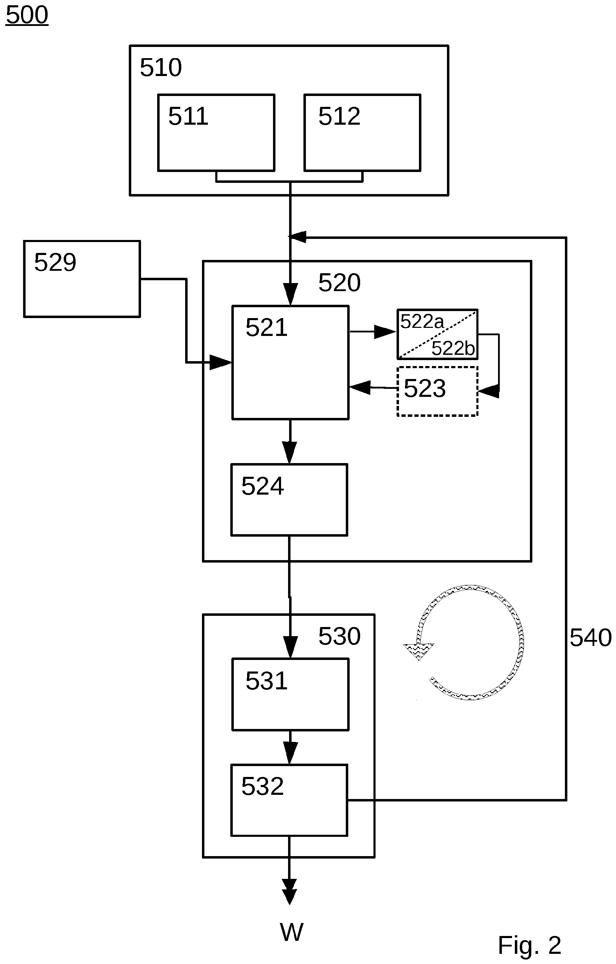

Dans le procédé qui vient d'être décrit, il doit être noté que la séquence des étapes doit être comprise dans un ordre dans lequel les étapes sont appliquées à une molécule donnée du fluide de travail, dont le circuit est symbolisé par la flèche circulaire sur la figure 2.

Ainsi, par exemple, il est permis dans le procédé que des molécules soient injectées ou réinjectées et simultanément d'autres molécules du fluide de travail soient produites.

Spécifiquement pour chaque site mettant en œuvre l'invention, l'ensemble des échanges thermiques sera évalué pour chaque molécule stockée sous la forme d'un attribut générique : le temps de rétention. Une valeur minimale de temps de rétention du fluide accumulateur dans le site géothermique prend en compte :
- des espacements de temps entre les puisages du fluide de travail ;
- un rendement thermique consécutif au mélange entre le fluide de travail stocké et celui réinjecté dans le piège ;
- une efficacité des échanges thermiques durant la migration de la molécule de fluide réinjecté entre le point de réinjection dans la partie basse du piège et la zone supérieure du piège dans laquelle elle se trouve stockée ;
- de l'échauffement du fluide accumulateur par frottement durant son transport dans les tubages des puits d'injection et de production ;
- des apports caloriques de surface résultant de l'eau chaude injectée avec le fluide de travail réinjecté.

Ainsi l''énergie récupérée en surface résulte d'une optimisation énergétique du processus d'augmentation de l'enthalpie du fluide de travail au contact des roches 211 du piège et des apports d'autres sources d'énergies 15, 16 utilisées pour chauffer l'eau 18 dont la chaleur est transmise au fluide de travail.

Le système permet donc de produire et stocker une énergie d'origine géothermique, mais également par la production d'eau chaude en surface de stocker une énergie d'origine externe en transmettant cette énergie au fluide de travail sous forme de chaleur avant son injection dans le piège.

L'énergie d'origine externe utilisée pour le chauffage de l'eau est par exemple d'origine solaire thermique ou d'origine géothermique.

Dans un autre mode de fonctionnement, qui peut être combiné au premier, l'énergie d'origine externe est une énergie dont la production est difficile à réguler ou à stocker et qui est produite en excès à un moment donné. Une telle situation se rencontre en particulier avec l'énergie photovoltaïque 15, disponible que le jour, l'énergie éolienne 16, disponible qu'en présence de vent, avec les centrales thermiques ou nucléaires, dont les contraintes de régulation ne permettent pas de suivre des variations rapides de la demande. Dans ces cas, l'énergie généralement électrique, produite à un moment qui ne correspond pas à la demande, est transformée en chaleur au moyen d'une pompe à chaleur pour chauffer l'eau qui sera injectée pour réchauffer le fluide de travail et constituer un stockage d'énergie utilisable à tout moment pour adapter la production d'énergie utilisable à la demande. Ce mécanisme permet d'obtenir un rendement énergétique compatible avec une exploitation industrielle du stockage comme cela sera illustré sur un exemple par la suite.

Ce mode de fonctionnement permet également de filtrer les imperfections en fréquences et en tensions électriques des systèmes de production d'énergies renouvelables en déconnectant des réseaux de distribution électrique l'énergie électrique produite par ces systèmes qui, convertie en chaleur dans le système de l'invention, sera produite à la demande par des dispositifs conventionnels de type turbine-alternateur produisant un courant propre et facile à synchroniser sur un réseau de distribution.

Le système tel qu'il vient d'être décrit et sa mise en œuvre présente de nombreux avantages sur les solutions géothermiques conventionnelles.

En particulier, il permet :
- la valorisation d'anciens sites pétroliers abandonnés ou en fins de vie, qui présentent souvent des caractéristiques géologiques adaptées à l'invention et permettent sa réalisation et sa mise en œuvre en bénéficiant de la connaissance relativement précise de la géologie du piège et des infrastructures existantes ;
- la production d'une énergie renouvelable avec des impacts écologiques et fonciers minimisés et inférieurs aux autres solutions connues de production électrique mettant en œuvre des énergies dites renouvelables d'origine hydraulique, d'origine éolienne ou d'origine solaire ;
- le stockage d'une énergie, calorifique ou convertible en chaleur, disponible en surface et restituable sous forme électrique, l'énergie disponible en surface pouvant être produite par des sources d'énergies dont les capacités de production sont décorrélées de la demande d'énergie ;
- l'amélioration de la qualité du courant électrique injecté dans un réseau du fait de la mise en œuvre d'alternateurs couplés à des turbines dont la synchronisation sur la fréquence et la tension spécifiées pour le réseau est plus simple que pour les sources, par exemple éoliennes ou photovoltaïques, régulées électroniquement ;
- la disponibilité de quantités importantes d'énergie stockées pouvant être mise en œuvre avec des temps de réactions courts, en particulier plus courts que pour l'énergie électrique produite par une chaudière industrielle par exemple, et sans être tributaire de conditions météorologiques aléatoires comme pour l'énergie d'origine éolienne ou d'origine solaire dont le développement est aujourd'hui limité par les problèmes de stockage de l'énergie produite à contretemps par rapport à la demande énergétique et les possibilités de régulation limitées ;
- la capacité à compléter les autres sources d'énergies en apportant les compléments de production d'énergie indispensables pour pallier aux insuffisances de vent pour l'éolien, d'ensoleillement pour le solaire, voire de quantité d'eau pour l'hydroélectricité ;
- accessoirement vis à vis de la production d'énergie, mais présentant une grande importance dans le domaine de l'environnement, le stockage stabile de grandes quantités de carbone entrant dans la molécule du fluide de travail, ce fluide n'étant plus ni relâché ni brûlé, mais restant séquestré dans le système.

Le cas échéant, au détriment de ce dernier effet environnemental, le fluide de travail 30 organique tel que du GPL constitue une réserve d'hydrocarbure stratégique qui pourrait être réutilisée comme carburant en cas de crise grave, sans que la constitution de cette réserve ne représente une charge improductive pour être formée et entretenue, étant sur ce point plus avantageuse que le stockage en cavités salines profondes ou autres pièges « statiques ».

L'invention présente ainsi de nombreux avantages qui se trouvent dans la stabilité du dispositif fonctionnant en circuit fermé, dans la performance d'extraction de l'énergie géothermique profonde existante dans les roches autour de 3000m de profondeur, dans le difficile problème du stockage d'une énergie produite par ailleurs sous une forme non stockable industriellement en grande quantité, dans la prédictibilité de l'énergie disponible et dans la réactivité de la production d'énergie.

Le débit d'énergie d'un site de production dépend naturellement de la capacité en stockage de fluide de travail du piège utilisé et des autres caractéristiques tel que le flux de chaleur géothermique. Lorsque qu'un piège est identifié et caractérisé, des simulations numériques sont avantageusement réalisées pour prédire au mieux les capacités de stockage et de production d'énergie qui pourront être espérées d'une implantation du dispositif sur le site. Ces simulations utilisent avantageusement, au moins en partie, les résultats de mesures des installations antérieures qui viennent affiner les modèles. Les techniques sont ici dérivées des méthodes mises en œuvre dans l'industrie de l'exploration et de la production de pétrole et des études géologiques en général.

En pratique la capacité énergétique d'un piège sera considérée en fonction de sa capacité à stocker et à maintenir ou amener une quantité de fluide accumulateur voulue à une température voulue de prélèvement en un temps donné, compte tenu de la température à laquelle il peut être porté au moment de son injection dans le piège.

Avantageusement le piège stocke une quantité de fluide accumulateur plusieurs fois supérieure à la quantité prélevée périodiquement pour produire de l'énergie, de sorte que le temps moyen de passage d'une molécule du fluide accumulateur dans le piège est équivalent à un multiple de la durée moyenne entre les prélèvements et bénéficie ainsi d'un temps adapté pour sa migration dans les roches du piège et son échauffement par géothermie.

Dans une forme de réalisation le segment de surface 10 comporte des moyens de coproduction d'énergie renouvelable de surface fonctionnant en alternance, le cas échéant en parallèle avec la production d'énergie à partir de l'énergie géothermique, et ou qui participe au chauffage de l'eau qui sera injectée dans le piège par le puits d'injection.

Les moyens de coproduction d'énergie renouvelable de surface sont par exemple un système de production d'électricité photovoltaïque 15 exploitant l'ensoleillement local et ou un système de production d'énergie éolienne 16, lesquels peuvent être mis en défaut par absence d'ensoleillement ou par absence de vent, et dans ces cas être relayés ou complétés par un apport d'énergie d'origine géothermique.

Dans le procédé de mise en œuvre il est comparé la production d'énergie disponible en surface avec une demande et en cas de déficit il est mis en œuvre la production d'énergie d'origine géothermique pour couvrir le déficit. Ce fonctionnement est bien sûr géré par le dispositif de supervision qui anticipe la quantité d'énergie que les différentes sources d'énergie seront en mesure de produire à plus ou moins long terme, qui anticipe la demande en fonction d'un réseau électrique de distribution, et qui prend en compte l'inertie du système 100 pour produire de l'énergie d'origine géothermique afin d'anticiper une séquence de démarrage.

Dans une forme de réalisation, le segment de surface 10 comporte au moins un réacteur 17 pour produire du GPL par exemple à partir d'un biogaz. Le GPL produit est alors utilisé dans un premier temps pour constituer une charge initiale de gaz accumulateur 30 dans le système 100, et progressivement pour augmenter cette charge jusqu'au maximum possible afin de former un stock d'énergie géothermique maximum pour un segment souterrain 20 donné, et afin de stocker un maximum de carbone pour éviter son rejet dans l'atmosphère sous forme de CO₂.

### EXEMPLE NUMÉRIQUE

Le système et le procédé sont susceptibles de prendre des formes et des dimensions variées en fonctions des besoins et des conditions géologiques rencontrées.

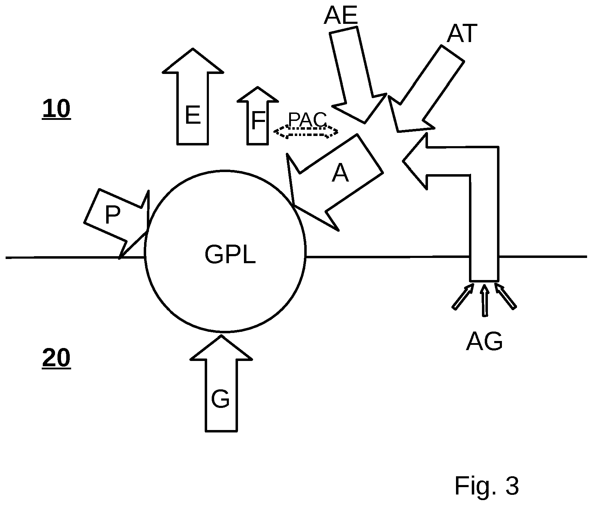

Le présent exemple numérique exposant un cas imaginaire de pré-dimensionnement d'un système conforme à l'invention n'est donc qu'une illustration des avantages possibles apportés par l'invention et n'est pas limitatif de l'invention. Le schéma de la figure 3 matérialise symboliquement les flux d'énergie auxquels est soumise une molécule du fluide de travail dont l'enthalpie évolue lors de la mise en œuvre de l'invention.

Dans cet exemple, le fluide de travail choisi est un GPL, considéré avec une densité ρ_{LPG} = 0,6 par rapport à l'eau, qui est utilisé pour stocker, transporter et restituer l'énergie.

Comme expliqué précédemment, le GPL présente des caractéristiques adaptées sur les plans thermodynamiques pour ses températures et pressions de changement de phase liquide/gaz, sur le plan chimique pour sa stabilité et sa non miscibilité avec l'eau, et sur le plan économique en raison de son prix modeste et de son abondance.

Dans cet exemple, le piège est une formation approchée théoriquement comme ayant la forme d'un dôme hémisphérique de 500 m de diamètre soit 250 m de hauteur enfermant les roches poreuses et perméables du piège, dont une calotte supérieure 21a d'une hauteur de 30 m correspond au volume de stockage potentiellement occupé par du fluide de travail, le reste du piège comportant l'aquifère dans la partie inférieure.

Avec ces hypothèses, le volume de roche déterminé par la calotte supérieure 21a est de 680 000 m³. Il est également considéré une porosité moyenne de 10 %, valeur de porosité généralement rencontrée à une profondeur de 3000 m dans les formations géologiques considérées avec une température de roches du piège d'environ 100 °C et un flux géothermique de 60 mW/m².

Le piège est donc, en théorie, en mesure de stocker 68 000 m³ de GPL, avec la porosité de 10 % retenue, soit environ 40 000 tonnes compte tenu de la densité du GPL.

En raison de la poussée d'Archimède exercée sur le GPL plus léger que l'eau de l'aquifère, le GPL se trouve comprimé dans le piège se traduisant par une pression de l'ordre de 130 bars en tête de puits.

Dans les conditions de pression et température du piège, l'enthalpie utilisable du GPL est d'environ 0,14 kWh/kg.

Ces caractéristiques physiques sont à mettre en relation avec les performances de fonctionnement du système qui se caractérise par :

### Le temps de rétention RT (exprimé ici en jours) :

**RT** est la durée nécessaire à la migration du GPL entre un puits d'injection et un puits de production, et ou à la régénération thermique du GPL, depuis sa température d'injection jusqu'à la température géothermique à l'équilibre, dans le stockage souterrain réalisé dans le piège. Une valeur de **RT** est estimée par une modélisation des flux de GPL dans les roches poreuses et des échanges thermiques pendant la phase d'injection et durant la période de stockage du GPL,

En pratique chaque site aura un temps de rétention **RT** spécifique fonction des conditions dans lesquelles le GPL injecté dans l'aquifère sous la zone réservoir percole et migre vers la zone de stockage supérieure et des caractéristiques du piège.

La valeur de **RT** est dépendante des apports thermiques de l'eau chaude injectée avec le fluide de travail.

### Le débit Q_{LPG} du puits producteur (exprimée ici en m³ / h) :

**Q**LPG est représentatif de la productivité du réservoir profond et se détermine donc en prenant en considération la perméabilité des roches qui doivent être traversées pendant le cycle de régénération de l'enthalpie du fluide de travail.

### La durée de la production journalière d'énergie DP (exprimée ici en heures par jour):

**DP** est un objectif de production fonction des conditions d'exploitation.

La masse **MGPL** de stockage de GPL nécessaire au fonctionnement du procédé (exprimée ici en tonnes) :
Cette masse se détermine par la formule **MGPL** = **Q**_{LPG} (m³/h) x ρ_{LPG} (kg/l) x **DP** (h/jour) x **RT** (jours), ce qui avec des valeurs de **Q**LPG = 300 m³/h, ρ_{LPG} = 0,6 kg/l, **DP** = 8 h/jour et **RT** = 7 jours, conduit à une masse **MGPL** nécessaire de 10080 tonnes de GPL.

Ainsi, avec les hypothèses conservatrices retenues, le piège considéré d'une capacité de stockage de 40 000 tonnes de GPL, permet de réaliser un système de stockage avec quatre puits de production au débit de 300 m³/h ou bien de deux puits au débit de 600 m³/h.

De tels débits peuvent être atteints sans difficulté majeure dans des formations réservoirs présentant des caractéristiques de perméabilité moyennes grâce à la mise en œuvre d'un gaz de travail comme le GPL qui est un gaz liquéfié léger et à faible viscosité.

### Bilan énergétique :

L'énergie produite par le système résulte du changement de phase du GPL chaud et en pression extrait du réservoir.

Principalement, il est produit une énergie mécanique au moyen de turbines, énergie mécanique avantageusement convertie en énergie électrique de manière conventionnelle.

Il est également possible, et avantageux, de produire du froid industriel au moyen de la récupération de la chaleur latente de vaporisation prélevée dans le milieu extérieur ambiant lorsque le GPL passe en phase vapeur avant d'être turbiné.

### La puissance délivrée :

Sur la base de l'hypothèse de 0,14 kWh/kg d'enthalpie utilisable du GPL stocké lorsqu'il est extrait du piège, un puits de production débitant naturellement 300 m³/h aura une puissance enthalpique maximum de 25 MW, de 50 MW pour un débit de 600 m³/h.

Avec une hypothèse de rendement [énergie électrique / énergie thermique] de 20%, un puits de production de 300 m³/h aux conditions géothermiques précitées aura un potentiel de production électrique de 5 MW.

### Le froid industriel :

La valorisation énergétique de la vaporisation endothermique du GPL en surface permet la production de froid à l'aide d'un prélèvement net de l'énergie dans le milieu ambiant.

Cette production de froid n'est pas contrainte par les conditions météorologiques extérieures. Elle se caractérise par une absence de rejets thermiques chauds vers le milieu extérieur, consécutifs à la phase de liquéfaction exothermique du gaz frigorigène, cette production de chaleur étant avantageusement conservée dans le GPL pour son injection dans le piège.

### Le bilan énergétique du système 100 :

Un rendement énergétique effectif global du système sera examiné au cas par cas en fonction des caractéristiques propres au site retenu et qui sont susceptibles d'influencer significativement le rendement, et dont les flux sont schématisés sur la figure 3 à laquelle il est fait référence.
Lorsqu'une molécule du fluide de travail effectue un cycle complet dans le procédé, ladite molécule reçoit avant d'être injectée dans le piège une énergie **A** qui augmente son enthalpie.
Cette énergie **A** est apportée par l'eau réchauffée en surface, ce qui peut être réalisé par tout moyen susceptible de produire de la chaleur, en particulier, de manière non exhaustive :
- une énergie électrique **AE** telle qu'une énergie électrique excédentaire d'un réseau de distribution, par exemple une énergie d'origine éolienne ou photovoltaïque ;
- une énergie thermique d'origine solaire **AT** ;
- une énergie thermique d'origine géothermique **AG.**

Suivant les conditions de mise en œuvre, en particulier les températures d'injection du gaz de travail dans le piège, les conditions de températures et la durée de rétention **RT,** l'enthalpie de la molécule sera augmentée, plus ou moins, d'une énergie d'origine géothermique **G.**
Lors de son parcours dans le segment de surface la molécule recevra également une énergie de processus **P,** liée au procédé mis en œuvre et résultant principalement des frottements dans les conduites où circule ladite molécule.

Enfin, la molécule, dont l'enthalpie a été augmentée, libère l'enthalpie accumulée pour produire de l'énergie **E** qui est valorisée par une machine thermodynamique entraînant par exemple un générateur d'électricité.

Sans prendre en compte un réchauffement du fluide de travail dans le piège **(G** négligé) et lié au processus **(P** négligé), l'énergie stockée correspond à l'énergie **A** apporté par l'eau chaude et ou au GPL introduits dans le puits d'injection. Ce modèle correspond à une mise en œuvre pour satisfaire un besoin de stockage.
L'énergie électrique **AE** à stocker sous forme thermique assure le chauffage d'eau et ou du fluide de travail réinjecté au moyen d'une pompe à chaleur **PAC** avec une efficacité énergétique comprise entre 3 et 4,5, dont la production de froid **F** en résultant peut être valorisée.
Compte tenu du rendement de conversion [énergie électrique / énergie thermique] de 0,2 lorsque le fluide de travail est exploité, il en résulte un rendement de stockage [énergie introduite **AE** / énergie restituée **E]** compris entre 0,6 et 0,9.
Ces rendements sont comparables en efficacité économique avec ceux des batteries d'accumulateur électrique ayant les meilleurs rendements (de l'ordre de 0,8 au maximum)

En pratique, le rendement apparent du système de l'invention peut être amélioré par les apports d'énergie thermique complémentaires qui participent au réchauffement du fluide de travail (apport géothermique dans le piège **G,** apport solaire thermique **AT,** apport géothermique opéré en surface **AG).**
Il doit également être noté que l'énergie introduite dans le système pour chauffer l'eau devant être injectée ne représente pas nécessairement un coût significatif dans le bilan économique. En effet, l'énergie utilisée pour chauffer l'eau est, au moins dans certaines situations, une énergie « perdue » dans le sens où il s'agit d'une énergie renouvelable qui ne sera pas produite faute de besoin, par exemple une énergie éolienne qui sera stoppée ou limitée faute d'une demande d'énergie, ou bien une énergie qui est produite mais doit être utilisée de manière non économique, par exemple une centrale thermique en surproduction dont la régulation ne permet pas de suivre précisément la demande.

Grâce à l'invention, cette énergie « inutilisée » est stockée efficacement et peut être restituée à la demande en fonction des besoins, tout en bénéficiant d'une valorisation géothermique du site de stockage et de production mis en œuvre.

L'invention permet donc de stocker de grandes quantités d'énergie sous forme thermique pour être restituée sous forme électrique, pouvant être injectée dans un réseau de distribution à des moments choisis sans contraintes liées à des conditions météorologiques plus ou moins capricieuses.

En outre ce résultat est obtenu en valorisant des sites souterrains naturels sans impact foncier ou écologique majeur.

## Revendications

1. Système (100) de production et de stockage d'énergie géothermique comportant un segment de surface (10) dans lequel l'enthalpie (H) d'un fluide, transporté dans un réseau de conduites, est transformée en énergie mécanique et ou en chaleur, et comportant un segment souterrain (20), ledit segment souterrain comportant au moins un puits d'injection (22) dont un tubage, relié au réseau de conduites du segment de surface (10), débouche dans une formation géologique souterraine perméable pouvant réchauffer un fluide injecté dans ladite formation géologique et ou maintenir une température dudit fluide injecté, et comportant au moins un puits de production (23) dont un tubage, relié au réseau de conduites du segment de surface (10), débouche dans ladite formation géologique ;
le système étant **caractérisé en ce que** :
- le fluide est un fluide de travail (30) organique, ayant une pression de liquéfaction PL inférieure à 10⁶ Pa à une température de 15°C, ayant en phase liquide une densité strictement inférieure à 1 par rapport à l'eau dans les mêmes conditions de pression et température, et étant non miscible avec l'eau ;
- la formation géologique souterraine détermine un piège (21) naturel, constituant un réservoir apte à contenir, dans des roches (211) perméables et poreuses, une quantité souhaitée du fluide de travail (30), et a permettre la circulation dudit fluide de travail dans lesdites roches, sous des couches supérieures (213) dudit piège, étanches pour ledit fluide de travail en phase liquide, et au-dessus d'un aquifère (212) associé audit piège, lesdites roches étant maintenue naturellement à des températures supérieures à 50°C par un flux de chaleur apporté par des roches inférieures (214), de sorte à constituer un réservoir de stockage d'énergie sous la forme d'une enthalpie dudit fluide de travail ;
- le ou les puits d'injection débouchent dans une partie basse (21b) du piège (21) de sorte que le fluide de travail (30) tend à migrer dans les roches (211) perméables et poreuses du piège (21) depuis la partie basse (21b) vers une partie haute (21a) dudit piège, sous l'effet d'une poussée d'Archimède générée sur ledit fluide de travail par l'aquifère (212) et sous l'effet d'une convection thermique s'opposant à une stratification, dans lesdites roches, dudit fluide de travail soumis à un réchauffement au contact desdites roches, lesdites roches étant réchauffées par le flux de chaleur provenant de roches inférieures (214).
- le segment de surface (10), le ou les puits d'injection (22), le piège (21) et le ou les puits de production (23) déterminent un circuit fermé pour le fluide de travail (30) dans lequel ledit fluide de travail est confiné.

2. Système (100) suivant la revendication 1, dans lequel le segment de surface (10) comporte un dispositif mélangeur (19) agencé sur le réseau de conduites pour mélanger de l'eau (18a) en phase liquide avec du fluide de travail avant d'introduire le mélange en résultant dans l'au moins un puits d'injection (22).

3. Système (100) suivant la revendication 2, dans lequel le segment de surface (10) comporte une pompe polyphasique agencée sur le réseau de conduites entre le dispositif mélangeur (19) et l'au moins un puits d'injection (22) pour introduire dans ledit au moins un puits d'injection le mélange de l'eau en phase liquide avec le fluide de travail en phase vapeur.

4. Système suivant la revendication 1 ou la revendication 2, dans lequel le segment de surface (10) comporte un condenseur (32) agencé sur le réseau de conduites entre une machine thermodynamique de transformation de l'enthalpie du fluide de travail en énergie mécanique et le puits d'injection (22).

5. Système (100) suivant l'une des revendications 2 à 4, dans lequel le segment de surface (10) comporte un dispositif de réchauffage (18) pour chauffer le fluide de travail en phase liquide et ou l'eau (18a) à une température supérieure ou égale à 50°C, et de préférence supérieure à 70°C.

6. Système (100) suivant l'une des revendications précédentes, dans lequel le segment de surface (10), le ou les puits d'injection (22) et le ou les puits de production (23) sont agencés pour injecter des volumes injectés du fluide de travail (30) dans le piège (21) et extraire des volumes extraits dudit fluide de travail dudit piège indépendamment l'un de l'autre, les différences de volumes entre les volumes injectés et les volumes extraits étant compensés par des variations du niveau de l'aquifère dans le piège.

7. Système (100) suivant l'une des revendications précédentes, dans lequel le fluide de travail (30) est essentiellement un gaz de pétrole liquéfié GPL comportant un mélange de propane et de butane.

8. Système (100) suivant l'une des revendications précédentes, dans lequel le segment de surface (10) comporte un évaporateur (31) dans lequel le fluide de travail (30) extrait par le ou les puits de production (23) est vaporisé pour entraîner une machine thermodynamique (11).

9. Procédé (500) de production et de stockage d'une énergie sous forme thermique, au moyen d'un système (100) conforme à l'une des revendications 1 à 8, **caractérisé en ce qu'**il comporte une étape initiale (510) de sélection d'un site souterrain de stockage (511) et d'un fluide accumulateur (512), dans laquelle étape initiale de sélection :
- le site souterrain de stockage (511) est choisi parmi des formations géologiques naturelles constituant un piège (21) comportant des roches poreuses et perméables sous des couches supérieures (213) étanches pour le fluide de travail (30) en phase liquide et déterminant, au-dessus d'un aquifère (212) dudit piège, un volume déterminé de confinement dudit fluide de travail, et dans lequel lesdites roches perméables et poreuses sont maintenues naturellement à des températures égales ou supérieures à 50°C par le flux de chaleur géothermique arrivant des roches inférieures (214) ;
- le fluide de travail (30) est un fluide organique, choisi parmi les fluides organiques en phases liquides dans les conditions de température et de pression dans le piège (21), de densités strictement inférieures à la densité de l'eau dans les conditions de température et de pression du piège (21), et qui ne sont pas miscibles avec l'eau.

10. Procédé suivant la revendication 9 comportant une étape de production et de stockage (520) d'une énergie sous forme thermique comportant :
- une phase d'injection (521) de fluide de travail (30), dans une partie basse (21b) du piège (21) par l'au moins un puits d'injection ;
- une phase de confinement (524) dans ledit piège dudit fluide de travail injecté pendant laquelle phase le fluide de travail migre vers une partie haute (21a) du piège, puis est stocké et maintenu à température dans le piège (21) au-dessus dudit aquifère ;
- une étape de puisage (531) dans laquelle du fluide de travail (30) chaud stocké dans le piège (21) est prélevé dans la partie haute (21a) dudit piège par au moins un puits de production et amené en phase liquide vers des installations du segment de surface (10).

11. Procédé suivant la revendication 10, dans lequel la phase d'injection (521) comporte une étape d'apport énergétique (522a) dans laquelle une énergie disponible en surface est utilisée pour chauffer le fluide de travail en phase liquide, à une température égale ou supérieure à 50°C, de préférence supérieure à 70°C, avant d'introduire ledit fluide de travail dans un puits d'injection (22).

12. Procédé suivant la revendication 10 ou la revendication 11 dans lequel des étapes de puisage (531) successives sont réalisées à des intervalles de temps dont une durée minimale est déterminée en fonction d'un volume maximum de fluide de travail prélevé lors d'une étape de puisage et d'un temps de rétention moyen d'une molécule de fluide de travail dans le piège.

13. Procédé suivant la revendication 12 dans lequel le fluide de travail est injecté dans le piège (21) avec une température sensiblement égale à la température des roches dudit piège et dans lequel le temps de rétention moyen est déterminé par la durée de migration de la molécule de fluide de travail entre la partie basse (21b) du piège dans laquelle elle est injectée et la partie haute (21a) de laquelle elle est extraite.

14. Procédé suivant la revendication 12 dans lequel dans lequel le fluide de travail est injecté dans le piège (21) avec une température inférieure à la température des roches dudit piège et dans lequel le temps de rétention moyen est déterminé par un temps nécessaire pour que ladite molécule de fluide de travail retrouve une enthalpie définie pour sa valorisation énergétique après son injection ou sa réinjection dans le piège (21) et avant son extraction dudit piège.

15. Procédé suivant l'une quelconque des revendications 12 à 14 dans lequel un volume maximum de fluide de travail prélevé dans un piège (21) donné lors d'une étape de puisage est défini pour ledit piège pour que le temps de rétention moyen assure la régénération de l'enthalpie d'un volume de fluide de travail réinjecté équivalent au volume maximum prélevé lors d'un puisage.

## Patentansprüche

1. System (100) zur Erzeugung und Speicherung von geothermischer Energie, das ein Oberflächensegment (10), in dem die Enthalpie (H) eines Fluids, das in einem Leitungsnetz transportiert wird, in mechanische Energie und oder in Wärme umgewandelt wird, und ein unterirdisches Segment (20) beinhaltet, wobei das unterirdische Segment einen Injektionsbohrung (22) beinhaltet, von dem eine Rohrleitung, die an das Leitungsnetz des Oberflächensegments (10) angeschlossen ist, in eine durchlässige unterirdische geologische Formation mündet, die ein Fluid, das in die geologische Formation injiziert wird, erwärmen kann oder eine Temperatur des injizierten Fluids halten kann, und mindestens eine Produktionbohrung (23) beinhaltend, von dem eine Rohrleitung, die an das Leitungsnetz des Oberflächensegments (10) angeschlossen ist, in die geologische Formation mündet;
wobei das System **dadurch gekennzeichnet ist, dass**:
- das Fluid ein organisches Arbeitsfluid (30) ist, das einen Verflüssigungsdruck PL kleiner als 10⁶ Pa bei einer Temperatur von 15 °C aufweist, in der Flüssigphase eine Dichte von streng kleiner als 1 in Bezug auf das Wasser unter denselben Druck- und Temperaturbedingungen aufweist, und nicht mit dem Wasser mischbar ist;
- die unterirdische geologische Formation eine natürliche Falle (21) bestimmt, die ein Reservoir bildet, das imstande ist, in den durchlässigen und porösen Gesteinen (211) eine gewünschte Menge des Arbeitsfluids (30) zu enthalten, und die Zirkulation des Arbeitsfluids in den Gesteinen unter oberen Schichten (213) der Falle, die für das Arbeitsfluid in Flüssigphase dicht sind, und oberhalb einem Aquifer (212), die der Falle zugeordnet ist, zu ermöglichen, wobei die Gesteine durch einen Wärmefluss, der durch untere Gesteine (214) beigebracht wird, natürlich auf Temperaturen von mehr als 50 °C gehalten werden, um ein Energiespeicherreservoir in Form einer Enthalpie des Arbeitsfluids zu bilden;
- die Injektionsbohrung(en) in einen unteren Teil (21b) der Falle (21) münden, sodass das Arbeitsfluid (30) dazu tendiert, in die durchlässigen und porösen Gesteine (211) der Falle (21) unter der Wirkung eines Archimedes-Schubs, der von dem Aquifer (212) auf das Arbeitsfluid generiert wird, und unter der Wirkung einer Wärmekonvektion, die sich einer Schichtung des Arbeitsfluids in den Gesteinen entgegenstellt, das bei Kontakt mit den Gesteinen einer Erwärmung unterzogen wird, von dem unteren Teil (21b) zu einem oberen Teil (21a) der Falle zu wandern, wobei die Gesteine durch die Wärmeströmung, die aus unteren Gesteinen (214) stammt, erwärmt werden.
- das Oberflächensegment (10), die Injektionsbohrung(en) (22), die Falle (21) und die Produktionbohrung (en) (23) einen geschlossenen Kreislauf für das Arbeitsfluid (30) bestimmen, in dem das Arbeitsfluid eingeschlossen ist.

2. System (100) nach Anspruch 1, wobei das Oberflächensegment (10) eine Mischvorrichtung (19) beinhaltet, die in dem Leitungsnetz angeordnet ist, um Wasser (18a) in Flüssigphase mit dem Arbeitsfluid zu mischen, bevor die daraus entstandene Mischung in den mindestens eine Injektionsbohrung (22) eingebracht wird.

3. System (100) nach Anspruch 2, wobei das Oberflächensegment (10) eine mehrphasige Pumpe beinhaltet, die in dem Leitungsnetz zwischen der Mischvorrichtung (19) und dem mindestens eine Injektionsbohrung (22) angeordnet ist, um die Mischung des Wassers in Flüssigphase mit dem Arbeitsfluid in Dampfphase in den mindestens eine Injektionsbohrung einzubringen.

4. System (100) nach Anspruch 1 oder Anspruch 2, wobei das Oberflächensegment (10) einen Kondensator (32) beinhaltet, der in dem Leitungsnetz zwischen einer thermodynamischen Umwandlungsmaschine der Enthalpie des Arbeitsfluids in mechanische Energie und der Injektionsbohrung (22) angeordnet ist.

5. System (100) nach einem der Ansprüche 2 bis 4, wobei das Oberflächensegment (10) eine Aufheizvorrichtung (18) zum Aufheizen des Arbeitsfluids in Flüssigphase und oder des Wassers (18a) auf eine Temperatur größer oder gleich 50 °C und vorzugsweise größer als 70 °C beinhaltet.

6. System (100) nach einem der vorstehenden Ansprüche, wobei das Oberflächensegment (10), die Injektionsbohrung(en) (22) und die Produktionbohrung(en) (23) angeordnet sind, um injizierte Volumina des Arbeitsfluids (30) in die Falle (21) zu injizieren, und extrahierte Volumina des Arbeitsfluids unabhängig voneinander aus der Falle zu extrahieren, wobei die Volumenunterschiede zwischen den injizierten Volumina und den extrahierten Volumina durch Variationen des Niveaus dem Aquifer in der Falle kompensiert werden.

7. System (100) nach einem der vorstehenden Ansprüche, wobei das Arbeitsfluid (30) im Wesentlichen ein Flüssiggas GPL ist, das eine Mischung aus Propan und Butan beinhaltet.

8. System (100) nach einem der vorstehenden Ansprüche, wobei das Oberflächensegment (10) einen Verdampfer (31) beinhaltet, in dem das aus dem Produktionsschacht (23) extrahierte Arbeitsfluid (30) verdampft wird, um eine thermodynamische Maschine (11) anzutreiben.

9. Verfahren (500) zur Erzeugung und Speicherung von Energie in thermischer Form, anhand eines Systems (100) nach einem der Ansprüche 1 bis 8, **dadurch gekennzeichnet, dass** es einen Anfangsschritt (510) des Auswählens einer unterirdischen Speicherstelle (511) und eines Speicherungsfluids (512) beinhaltet, wobei in dem Anfangsschritt des Auswählens:
- die unterirdische Lagerstätte (511) aus natürlichen geologischen Formationen ausgewählt wird, die eine Falle (21) bilden, die poröse und durchlässige Gesteine unter den dichten oberen Schichten (213) für das Arbeitsfluid (30) in Flüssigphase beinhaltet, und über einem Aquifer (212) der Falle ein bestimmtes Einschlussvolumen des Arbeitsfluids bestimmt, und wobei die durchlässigen und porösen Gesteine durch die geothermische Wärmeströmung, die in den unteren Gesteinen (214) ankommt, natürlich auf Temperaturen gleich oder größer als 50 °C gehalten werden;
- das Arbeitsfluid (30) ein organisches Fluid ist, das aus organischen Fluiden in Flüssigphasen unter Temperatur- und Druckbedingungen in der Falle (21), mit Dichten streng kleiner als die Dichte des Wassers unter den Temperatur- und Druckbedingungen in der Falle (21) ausgewählt werden, und nicht mit dem Wasser mischbar sind.

10. Verfahren nach Anspruch 9, einen Schritt des Erzeugens und Speicherns (520) einer Energie in thermischer Form beinhaltend, der beinhaltet:
- eine Injektionsphase (521) eines Arbeitsfluids (30) in einen unteren Teil (21b) der Falle (21) durch mindestens eine Injektionsbohrung;
- eine Einschlussphase (524) in der Falle des injizierten Arbeitsfluids, wobei das Arbeitsfluid während dieser Phase in einen oberen Teil (21a) der Falle wandert, danach gespeichert, und auf Temperatur in der Falle (21) über der wasserführenden Schicht gehalten wird;
- einen Entnahmeschritt (531), bei dem in der Falle (21) warmes Arbeitsfluid (30) in dem oberen Teil (21a) der Falle durch mindestens einen Produktionsschacht entnommen, und in Flüssigphase zu den Installationen des Oberflächensegments (10) gebracht wird.

11. Verfahren nach Anspruch 10, wobei die Injektionsphase (521) einen Energiebeitragsschritt (522a) beinhaltet, bei dem eine an der Oberfläche verfügbare Energie verwendet wird, um das Arbeitsfluid in Flüssigphase auf eine Temperatur gleich oder größer als 50 °C, vorzugsweise größer als 70 °C zu erwärmen, bevor das Arbeitsfluid in einen Injektionsschacht (22) eingebracht wird.

12. Verfahren nach Anspruch 10 oder Anspruch 11, wobei aufeinanderfolgende Entnahmeschritte (531) in Zeitintervallen durchgeführt werden, deren Mindestdauer in Abhängigkeit von einem maximalen Arbeitsfluidvolumen, das bei einem Entnahmeschritt entnommen wird, und von einer mittleren Rückhaltezeit eines Arbeitsfluidmoleküls in der Falle bestimmt wird.

13. Verfahren nach Anspruch 12, wobei das Arbeitsfluid mit einer Temperatur im Wesentlichen gleich der Temperatur der Gesteine der Falle in die Falle (21) injiziert wird, und wobei die mittlere Rückhaltezeit durch die Dauer der Wanderung der Arbeitsfluidmoleküle zwischen dem unteren Teil (21b) der Falle, in den es injiziert wird, und dem oberen Teil (21a), aus dem es extrahiert wird, bestimmt wird.

14. Verfahren nach Anspruch 12, wobei das Arbeitsfluid mit einer geringeren Temperatur als die Temperatur der Gesteine der Falle in die Falle (21) injiziert wird, und wobei die mittlere Rückhaltezeit durch eine Zeit bestimmt wird, die nötig ist, damit das Arbeitsfluidmolekül eine Enthalpie wiederfindet, die für seine Energieverwertung nach seiner Injektion oder seiner erneuten Injektion in die Falle (21) und vor seiner Extrahierung aus der Falle definiert wird.

15. Verfahren nach einem der Ansprüche 12 bis 14, wobei ein maximales Arbeitsfluidvolumen, das in einem Entnahmeschritt aus einer gegebenen Falle (21) entnommen wird, für die Falle definiert wird, damit die mittlere Rückhaltezeit für die erneute Generierung der Enthalpie eines erneut injizierten Arbeitsfluidvolumens gleich dem maximalen bei der Entnahme entnommenen maximalen Volumen sorgt.

## Claims

1. System (100) of production and geothermal storage of energy including a surface segment (10) in which the enthalpy (H) of a fluid conveyed into a pipe network, is transformed into mechanical and/or thermal energy, and including an underground segment (20), said underground segment having at least one injection well (22) with a casing of which, connected to the surface segment pipe network (10) opens into an underground permeable geological formation capable of heating and/or maintaining a temperature of an injected fluid into said geological formation and including at least one production well (23) of which a casing, connected to the surface segment pipe network (10), ends into said geological formation;
the system being **characterized in that**:
- the fluid is an organic working fluid (30), having a liquefaction pressure PL of less than 10⁶ Pa at 15°C temperature, having in liquid phase a density strictly less than 1 compared with water under the same pressure and temperature conditions, and being immiscible with water;
- the subsurface geological formation determines a natural trap (21), forming a reservoir able to contain, in permeable and porous rocks (211), a desired quantity of the working fluid (30), and to allow the circulation of said working fluid in said rocks, under upper layers (213) of said trap, which are impermeable for said working fluid in liquid phase, and above an aquifer (212) associated with said trap, said rocks being naturally maintained at temperatures greater than 50°C by a heat flow from lower rocks (214), in order to constitute an energy storage reservoir in the form of the enthalpy of said working fluid;
- the injection well or wells end in a lower part (21 b) of the trap (21) so that the working fluid (30) tends to migrate in the permeable and porous rocks (211) of the trap (21) from the lower part (21 b) towards an upper part (21 a) of said trap, under the buoyancy effect generated by the aquifer (212) on said working fluid and under the effect of thermal convection preventing stratification, in said rocks, of said working fluid subjected to heating upon contact with said rocks, said rocks being heated by heat flow from lower rocks (214);
- the surface segment (10), the injection well or wells (22), the trap (21), and the production well or wells (23) determine a closed circuit for the working fluid (30) in which said working fluid is confined.

2. System (100) according to claim 1, where the surface segment (10) comprises a mixing device (19) arranged on the pipe network to mix water (18a) in liquid phase with working fluid before introducing the resulting mixture into the at least one injection well (22).

3. System (100) according to claim 2, where the surface segment (10) includes a multiphase pump arranged on the pipe network between the mixing device (19) and at least one injection well (22) to introduce into said at least one injection well the mixture of the water in liquid phase with the working fluid in vapor phase.

4. System according to claim 1 or claim 2, where the surface segment (10) comprises a condenser (32) arranged on the pipe network between a thermodynamic machine for converting the working fluid enthalpy into mechanical energy and the injection well (22).

5. System (100) according to any of claims 2 to 4, where the surface segment (10) includes a heating device (18) for heating the liquid phase working fluid and or water (18a) to a temperature greater than or equal to 50°C, and preferably greater than 70°C.

6. System (100) according to any of the previous claims, wherein the surface segment (10), one or more injection wells (22) and one or more production wells (23) are designed to inject volumes of working fluid (30) into the trap (21) and extract volumes of said working fluid from said trap independently of each other, wherein differences in volumes between injected and extracted volumes are compensated by aquifer level fluctuations within the trap.

7. System (100) according to any of the previous claims, where the working fluid (30) is essentially a liquefied petroleum gas LPG containing a mixture of propane and butane.

8. System (100) according to any of the previous claims, where the surface segment (10) includes an evaporator (31) in which the working fluid (30) produced by the production well(s) (23) is vaporized to drive a thermodynamic machine (11).

9. Method (500) for production and storage of energy in thermal form, by means of a system (100) compliant with any of claims 1 to 8, **characterized by** it comprises an initial selection step (510) of an underground storage site (511) and a heat carrier fluid (512), in which initial selection step:
- underground storage site (511) is chosen among natural geological formations forming a trap (21) including porous and permeable rocks under upper layers (213) that are impermeable for the working fluid (30) in liquid phase and determining, above an aquifer (212) of said trap, a determined volume for the containment of said working fluid, and in which said permeable and porous rocks are naturally maintained at temperatures equal to or greater than 50°C by the geothermal heat flow arriving from the lower rocks (214);
- working fluid (30) is an organic fluid, selected from organic fluids in liquid phases under the temperature and pressure conditions in the trap (21), with densities strictly lower than the water density under the trap temperature and pressure conditions (21), and which are not miscible with water.

10. Method according to claim 9 comprising a step of production and storage (520) of energy in thermal form, comprising:
- an injection phase (521) of working fluid (30), in a lower part (21b) of the trap (21) by at least one injection well;
- a containment phase (524) in said trap of said injected working fluid during which working fluid migrates to an upper part (21a) of the trap, then is stored and maintained at temperature in the trap (21) above said aquifer;
- a withdrawal step (531) in which hot working fluid (30) stored in the trap (21) is withdrawn from the upper portion (21a) of said trap through at least one production well and supplied in liquid phase to the surface segment facilities (10).

11. Method according to claim 10, in which the injection phase (521) comprises an energy supply step (522a) in which energy available at surface is used to heat the working fluid in liquid phase, to a temperature equal to or greater than 50°C, preferably greater than 70°C, before injecting said working fluid into an injection well (22).

12. Method according to claim 10 or claim 11 in which successive withdrawal steps (531) are performed at time intervals of which a minimum duration is determined as a function of a maximum working fluid volume withdrawn during a withdrawal step and an average retention time of a working fluid molecule in the trap.

13. Method according to claim 12 in which the working fluid is injected into the trap (21) with a temperature approximately equal to the rock temperature of said trap and in which the average retention time is determined by the migration time of the working fluid molecule between the lower part (21b) of the trap into which it is injected and the upper part (21 a) from which it is extracted.

14. Method according to claim 12 in which the working fluid is injected into the trap (21) with a temperature lower than the rock temperature of said trap and in which the average retention time is determined by the time required for said working fluid molecule to recover a defined enthalpy for its energy valorization after it is injected or re-injected into the trap (21) and before it is extracted from said trap.

15. Method according to any of claims 12 to 14 in which a maximum volume of working fluid withdrawn from a given trap (21) during a drawdown step is defined for said trap so that the average retention time ensures the enthalpy regeneration of a working fluid volume equivalent to the maximum volume withdrawn during a drawdown.
